# EUROPÄISCHE PATENTSCHRIFT

(11) **EP 2 991 860 B1**
(45) Veröffentlichungstag und Bekanntmachung des Hinweises auf die Patenterteilung: **04.04.2018**
(21) Anmeldenummer: 14722096.6
(22) Anmeldetag: 12.04.2014
(51) Int. Cl.: B60R 19/26

(54) **VORRICHTUNG ZUM ABSORBIEREN VON BEWEGUNGSENERGIE, INSBESONDERE ZUM EINBAU IN EIN KRAFTFAHRZEUG**
DEVICE FOR ABSORBING KINETIC ENERGY, IN PARTICULAR FOR INSTALLING IN A MOTOR VEHICLE
DISPOSITIF D'ABSORPTION D'ÉNERGIE CINÉTIQUE DESTINÉ NOTAMMENT À ÊTRE ENCASTRÉ DANS UN VÉHICULE AUTOMOBILE

(30) Priorität: 02.05.2013 DE 102013007594
(43) Veröffentlichungstag der Anmeldung: 09.03.2016
(73) Patentinhaber: Audi AG, 85045 Ingolstadt (DE)
(72) Erfinder: WENDEL, Bettina, 90482 Nürnberg (DE); KLINKERT, Carsten, 85122 Hitzhofen (DE); DORFNER, Wolfgang, 85114 Buxheim (DE)
(86) Internationale Anmeldenummer: PCT/EP2014/000985
(87) Internationale Veröffentlichungsnummer: WO 2014/177250

(56) Entgegenhaltungen:
- EP-A1- 1 894 792
- EP-A1- 2 497 689
- WO-A1-2004/113131
- DE-A1-102004 047 884
- DE-A1-102010 048 861
- US-B1- 8 246 091
- US-B1- 8 267 445

## Beschreibung

Die Erfindung betrifft eine Vorrichtung zum Absorbieren von Bewegungsenergie, insbesondere zum Einbau in ein Kraftfahrzeug, gemäß dem Oberbegriff des Patentanspruchs 1.

Aus dem Kraftfahrzeugbau sind für den Personenschutz im Crash-Fall Vorrichtungen zum Absorbieren von Bewegungsenergie bekannt. Diese Vorrichtungen umfassen beispielsweise ein erstes stationäres Bauteil und ein zweites, relativ zu dem ersten Bauteil bewegliches Bauteil und eine Koppelungseinrichtung, welche das erste Bauteil und das zweite Bauteil in Wirkverbindung bringt. Zumindest eines der Bauteile wandelt bei Überschreiten eines bestimmten Kraftniveaus Energie durch plastische Verformung um. Die Koppelungseinrichtung verbindet die beiden Bauteile derart, dass bei nicht aktivierter Koppelungseinrichtung die beiden Bauteile nur mit geringer Energieumwandlung zueinander bewegbar sind und bei aktivierter Koppelungseinrichtung Kräfte von einem Bauteil auf das andere Bauteil übertragbar sind.

Aus der DE 10 2008 048 678 A1 ist beispielsweise eine Vorrichtung zum Absorbieren von Bewegungsenergie, insbesondere zum Einbau in ein Kraftfahrzeug, bekannt. Je nach Belastungsfall erfolgt eine Koppelung eines bewegten Bauteils mit einem stationären Bauteil. Bei einem Fußgängeraufprall erfolgt keine Koppelung beider Bauteile, so dass nur minimal Energie abgebaut wird. Wird kein Fußgängeraufschlag sensiert, dann erfolgt eine Koppelung beider Bauteile, um ohne Wegeverlust Energie auf einem hohen Kraftniveau abzubauen. Die Koppelung beider Bauteile erfolgt nicht dauerhaft und es ist ein Deformationselement mit reduzierbarem weichem Schaum vorgesehen, welches zunächst bei einem Fußgängeraufprall nachgeben könnte.

Aus der WO 2004/113131 A1 ist eine Vorrichtung zum Absorbieren von Bewegungsgemäß dem Oberbegriff des Anspruchs 1, insbesondere zum Einbau in ein Kraftfahrzeug bekannt. Die Vorrichtung umfasst ein erstes stationäres Bauteil und ein zweites, relativ zum ersten Bauteil bewegliches Bauteil. Hierbei wandelt zumindest eines der Bauteile bei Überschreiten eines bestimmten Kraftniveaus durch plastische Verformung Energie um. Zudem umfasst die Vorrichtung eine Koppelungseinrichtung, welche das erste Bauteil und das zweite Bauteil derart in Wirkverbindung bringt, dass bei nicht aktivierter Koppelungseinrichtung die beiden Bauteile nur mit geringer Energieumwandlung zueinander bewegbar sind und bei aktivierter Koppelungseinrichtung Kräfte von einem Bauteil auf das andere Bauteil übertragbar sind. Die Koppelungseinrichtung ist dauerhaft im Eingriff mit den beiden Bauteilen und erzeugt so dauerhaft ein erstes niedriges Koppelungskraftniveau und bei Aktivierung der Koppelungseinrichtung erfolgt eine Verstärkung der Koppelungskräfte von dem ersten niedrigen Koppelungskraftniveau auf ein hohes Koppelungskraftniveau und es kommt zu einer plastischen Verformung zumindest eines Bauteils.

Aus der EP 1 894 792 A1 ist eine Stoßfängerstruktur für ein Fahrzeug bekannt, bei welcher zusätzlich zu energieabsorbierenden Crashboxen, ein weiteres plastisch verformbares Element zwischen einer Stoßstange und einer Stoßfängerverkleidung angeordnet ist, welches im Falle einer leichten Kollision die gesamte Aufprallenergie aufnehmen kann, ohne dass die Crashboxen verformt werden.

Die Aufgabe der Erfindung ist es, eine Vorrichtung zum Absorbieren von Bewegungsenergie, insbesondere zum Einbau in ein Kraftfahrzeug, anzugeben, bei der ein verbesserter Fußgängerschutz ermöglicht wird, wobei auch bei stärkeren Crash-Fällen eine gute Energieabsorption erfolgt.

Erfindungsgemäß wird die Aufgabe durch Bereitstellung einer Vorrichtung zum Absorbieren von Bewegungsenergie, insbesondere zum Einbau in ein Kraftfahrzeug, mit den Merkmalen des Patentanspruchs 1 gelöst. Vorteilhafte Ausführungsformen und Weiterbildungen der Erfindung sind in den abhängigen Ansprüchen angegeben.

Ausführungsformen der vorliegenden Erfindung stellen eine Vorrichtung zum Absorbieren von Bewegungsenergie, insbesondere zum Einbau in ein Kraftfahrzeug, zur Verfügung, welche ein erstes stationäres Bauteil und ein zweites, relativ zu dem ersten Bauteil bewegliches Bauteil umfasst. Zumindest eines der Bauteile wandelt bei Überschreiten eines bestimmten Kraftniveaus durch plastische Verformung Energie um. Zudem ist eine Koppelungseinrichtung vorgesehen, welche das erste Bauteil und das zweite Bauteil in Wirkverbindung bringt, derart, dass bei nicht aktivierter Koppelungseinrichtung die beiden Bauteile nur mit geringer Energieumwandlung zueinander bewegbar sind und bei aktivierter Koppelungseinrichtung Kräfte von einem Bauteil auf das andere Bauteil übertragbar sind. Hierbei verfügt das bewegte Bauteil über ein Deformationselement, welches im Crash-Fall zunächst verformt, so dass es erst anschließend zu einer Bewegung des bewegten Bauteils kommt, wobei die Koppelungseinrichtung dauerhaft im Eingriff mit den beiden Bauteilen ist und so dauerhaft ein erstes niedriges Koppelungskraftniveau erzeugt und bei Aktivierung der Koppelungseinrichtung eine Verstärkung der Koppelungskräfte von dem ersten niedrigen Koppelungskraftniveau auf ein hohes Koppelungskraftniveau erfolgt und es zu einer plastischen Verformung zumindest eines Bauteils kommt.

Zudem ist zur Aktivierung der Koppelungseinrichtung ein Verriegelungselement vorgesehen. Dies ermöglicht ein einfaches und zuverlässiges Umschalten der erfindungsgemäßen Vorrichtung zwischen den verschiedenen Kopplungskraftniveaus.

Des Weiteren umfasst die Koppelungseinrichtung zumindest einen Bügel, welcher beide Bauteile verbindet und der zur Aktivierung der Koppelungseinrichtung von dem Verriegelungselement nach außen zum bewegten Bauteil hin weggedrückt wird. Der zumindest eine Bügel ist in eine Aufnahmeöffnung des stationären Bauteils eingeführt und führt durch Öffnungen im beweglichen Bauteil hindurch in das Innere des beweglichen Bauteils. Das Verriegelungselement kann auf einfache Art und Weise als beweglicher Riegel ausgeführt werden, welcher von einer Entriegelungsstellung in eine Verriegelungsstellung bewegbar ist. Eine gute Verspreizungswirkung der Bügel wird erreicht, wenn der Riegel drehbeweglich mit abgerundeten Kanten ausgeführt ist, welche auf einer Oberfläche des Verriegelungselements wirken und dieses nach außen durch korrespondierende Öffnungen im beweglichen zweiten Bauteil in entsprechende Aufnahmen im stationären Bauteil drücken. Dies ermöglicht eine einfache und zuverlässige Umsetzung der Koppelungsvorrichtung für die erfindungsgemäße Vorrichtung zum Absorbieren von Bewegungsenergie.

Ausführungsformen der erfindungsgemäßen Vorrichtung ermöglichen in vorteilhafter Weise eine Abstufung des Fußgängerschutzes, da das bewegte Bauteil über ein Deformationselement verfügt, welches vorzugsweise als reduzierbares Schaumelement, ausgeführt ist und im Crash-Fall zunächst verformt wird, so dass es erst anschließend zu einer Bewegung des bewegten Bauteils kommt. Hierbei ist die Koppelungseinrichtung dauerhaft im Eingriff mit den beiden Bauteilen und erzeugt so dauerhaft ein erstes niedriges Koppelungskraftniveau. Durch das niedrige Koppelungskraftniveau im deaktivierten Zustand der Koppelungseinrichtung können die Abmessungen des Deformationsele-ments reduziert werden, so dass in vorteilhafter Weise bei gleichbleibendem Fußgängerschutz eine Überhangverkürzung des Fahrzeugs im Bereich von 30 bis 60 mm möglich ist. Wird hingegen ein Low- oder Highspeed-Crash sensiert, erfolgt eine Aktivierung der Koppelungseinrichtung und damit unmittelbar eine Verstärkung der Koppelungskräfte von dem ersten niedrigen Koppelungskraftniveau auf ein hohes Koppelungskraftniveau, so dass es anschließend zu einer plastischen Verformung zumindest eines Bauteils kommt.

In weiterer vorteilhafter Ausgestaltung der erfindungsgemäßen Vorrichtung zum Absorbieren von Bewegungsenergie kann das stationäre Bauteil an einer Prallplatte eines Längsträgers gehalten werden. Hierbei taucht das bewegliche Bauteil im Crash-Fall bei. deaktivierter Koppelungseinrichtung zumindest teilweise in das stationäre Bauteil ein. Bei aktivierter Koppelungseinrichtung sind das bewegliche Bauteil und das stationäre Bauteil im Crash-Fall fest miteinander gekoppelt und sind durch Falten plastisch verformbar. Durch das Anliegen des stationären Bauteils an der Prallplatte und die feste Kopplung der beiden Bauteile wird in vorteilhafter Weise eine gute Energieabsorption durch Falten der beiden Bauteile ermöglicht.

Alternativ kann das stationäre Bauteil direkt mit dem Längsträger verbunden werden, beispielsweise über einen Verbindungsflansch. Hierbei taucht das bewegliche Bauteil im Crash-Fall bei deaktivierter Kopplungseinrichtung zumindest teilweise in den Längsträger ein. Hierbei kann das bewegliche Bauteil im Crash-Fall auch bei aktivierter Koppelungseinrichtung zumindest teilweise in den Längsträger eintauchen, wobei die Kopplungseinrichtung das bewegliche Bauteil während des Eintauchens durch Scheren plastisch verformt. Dies ermöglicht in vorteilhafter Weise eine gute Energieabsorption durch Scheren des bewegten Bauteils. Alternativ kann das bewegliche Bauteil im Crash-Fall bei aktivierter Koppelungseinrichtung blockiert und durch Falten plastisch verformt werden. Durch feste Kopplung der beiden Bauteile wird in vorteilhafter Weise eine gute Energieabsorption durch Falten des beweglichen Bauteils ermöglicht.

In weiterer vorteilhafter Ausgestaltung der erfindungsgemäßen Vorrichtung zum Absorbieren von Bewegungsenergie kann der Längsträger beispielsweise als Einkammerhohlprofil oder als Zweikammerhohlprofil ausgebildet werden.

In weiterer vorteilhafter Ausgestaltung der erfindungsgemäßen Vorrichtung zum Absorbieren von Bewegungsenergie kann eine im Fahrzeug vorhandene Pre-Crash-Sensorik eingesetzt werden, welche bei einem erkannten Crashfall vor dem Aufprall die Koppelungseinrichtung aktiviert und das Verriegelungselement von der Entriegelungsstellung in die Verriegelungsstellung bewegt. Zusätzlich oder alternativ kann die im Fahrzeug vorhandene Pre-Crash-Sensorik auch eingesetzt werden, um bei einem erkannten bevorstehenden Fußgängeraufprall die Koppelungseinrichtung zu deaktivieren und das Verriegelungselement von der Verriegelungsstellung in die Entriegelungsstellung zu bewegen.

Vorteilhafte Ausführungsformen der Erfindung sind in der Zeichnung dargestellt und werden nachfolgend beschrieben.

Dabei zeigen:
- Fig. 1: eine schematische Darstellung eines ersten Ausführungsbeispiels einer erfindungsgemäßen Vorrichtung zum Absorbieren von Bewegungsenergie in einer weich geschalteten Stellung,
- Fig. 2: eine schematische Darstellung der erfindungsgemäßen Vorrichtung zum Absorbieren von Bewegungsenergie aus Fig. 1 in einer hart geschalteten Stellung,
- Fig. 3: eine schematische Darstellung eines zweiten und dritten Ausführungsbeispiels einer erfindungsgemäßen Vorrichtung zum Absorbieren von Bewegungsenergie in einer weich geschalteten Stellung,
- Fig. 4: eine schematische Darstellung des zweiten Ausführungsbeispiels der erfindungsgemäßen Vorrichtung zum Absorbieren von Bewegungsenergie aus Fig. 3 in einer hart geschalteten Stellung, und.
- Fig. 5: eine schematische Darstellung des dritten Ausführungsbeispiels der erfindungsgemäßen Vorrichtung zum Absorbieren von Bewegungsenergie aus Fig. 3 in einer hart geschalteten Stellung.

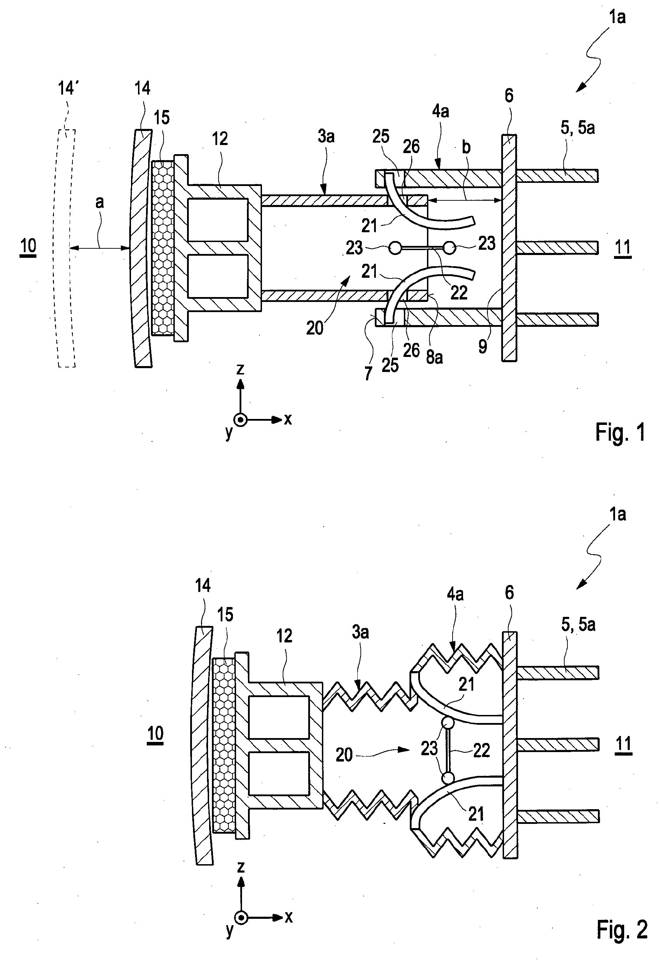

Die Fig. 1 bis 5 zeigen Ausführungsformen der erfindungsgemäßen Vorrichtung 1a, 1b, 1c zum Absorbieren von Bewegungsenergie zum Einbau insbesondere in den Frontbereich eines Kraftfahrzeugs. Fig. 1 und 2 zeigen ein erstes Ausführungsbeispiel der erfindungsgemäßen Vorrichtung 1a, welche als so genannte Faltbox ausgeführt ist, bei der ein bewegliches durchmesserkleineres erstes Bauteil 3a in ein stehendes zweites durchmessergrößeres Bauteil 4a einfährt, bis es zu einer Verformung zumindest eines der Bauteile 3a, 4a kommt. Das zweite stationäre Bauteil 4a ist an einem fahrzeugseitigen Längsträger 5a befestigt und wird von einer Prallplatte 6 abgeschlossen. Das bewegliche erste Bauteil 3a ist beispielsweise als Rohrelement ausgebildet und zu einem Fahrzeugäußeren 10 hin an einem Stoßfängerquerträger 12 befestigt, welcher beispielsweise als Hohlprofil ausgebildet ist. Weiter zum Fahrzeugäußern 10 hin ist zwischen dem Stoßfängerquerträger 12 und einem Stoßfängerüberzug 14 ein als Schaumelement ausgeführtes Deformationselement 15 verbaut, welches eine Länge von etwa 15 bis 35 mm aufweist. Die erfindungsgemäße Vorrichtung 1a ist Teil eines Stoßfängersystems für die Front eines Kraftfahrzeugs, das im Wesentlichen aus dem Stoßfängerüberzug 14, dem Schaumelement 15, dem Stoßfängerquerträger 12, dem ersten beweglichen Bauteil 3a und dem zweiten stationären Bauteil 4a und der Prallplatte 6 am Längsträger 5a besteht. Beide Bauteile 3a, 4a sind deformierbar gestaltet. Das erste Bauteil 3a und das zweite Bauteil 4a bilden ein so genanntes Typschadenelement. Erfindungsgemäß sind die beiden Bauteile 3a, 4a über eine Koppelungseinrichtung 20 dauerhaft miteinander verbunden. Die Koppelungseinrichtung 20 wird von zumindest einem Bügel 21 und einem Verriegelungselement 22 gebildet. Das zweite Bauteil 4a stützt sich an der Prallplatte 6 ab, welche zu einem Fahrzeuginneren 11 hin an den fahrzeugseitigen Längsträger 5 angebunden ist. Der Längsträger 5 ist hierbei als Zweikammerprofil 5a ausgebildet.

Die Koppelungseinrichtung 20 ist so gestaltet, dass es dauerhaft zu einer Kopplung des beweglichen Bauteils 3a mit dem stationären Bauteil 4b kommt. Hierzu ist zumindest ein Bügel 21 vorgesehen, wobei mehrere Bügel 21 am Umfang vorgesehen werden können.

Wie aus Fig. 1 und 2 weiter ersichtlich ist, werden die Bügel 21 vorzugsweise paarweise gegenüberliegend am Umfang angeordnet. Die Bügel 21 sind in Aufnahmeöffnungen 25 des stationären Bauteils 4a eingeführt und führen durch Öffnungen 26 im beweglichen Bauteil 3a hindurch in das Innere des beweglichen Bauteils 3a. Insgesamt bilden die Bügel 21 im dargestellten Ausführungsbeispiel die Form einer konvergenten Düse, die sich in Fahrzeuglängsrichtung x, von links nach rechts gesehen, verjüngt. Zwischen den Bügeln 21 ist im dargestellten Ausführungsbeispiel zentrisch im beweglichen Bauteil 3a ein Verriegelungselement 22 vorgesehen, welches im dargestellten Ausführungsbeispiel als drehbarer länglicher Riegel ausgeführt ist. Selbstverständlich sind auch andere geeignete Ausführungsformen der Koppelungseinrichtung vorstellbar, welche im Crashfall eine feste oder lose Koppelung zwischen den beiden Bauteilen 3a, 4a ermöglichen, um verschiedene Kraftniveaus für den Abbau von Crashenergie zur Verfügung zu stellen.

In Fig. 1 ist ein Zustand der Vorrichtung 1a im Normalfall bzw. vor einem Aufprall gezeigt, bei dem der gestrichelt dargestellte Stoßfängerüberzug 14 die Position des Stoßfängerüberzugs 14 bei einem herkömmlichen Deformationselement mit einer Länge von 60 bis 70 mm in einem herkömmlichen Kraftfahrzeug repräsentiert. Durch die erfindungsgemäße Vorrichtung 1a zum Absorbieren von Bewegungsenergie ergibt sich eine mögliche Verkürzung a des Fahrzeugüberhangs im Bereich von 35 bis 55 mm, da im Vergleich mit dem herkömmlichen Deformationselement, das Deformationselement 15 der erfindungsgemäßen Vorrichtung 1a bei gleichbleibenden Personenschutz wesentlich kürzer ausgeführt werden kann.

In Fig. 1 befindet sich das Verriegelungselement 22 in einer entriegelten Stellung, so dass das als drehbeweglicher länglicher Riegel ausgeführte Verriegelungselement 22 in Fahrzeuglängsrichtung x ausgerichtet ist. Bei Aktivierung schwenkt das Verriegelungselement 22 in eine senkrecht zur Fahrzeuglängsrichtung x verlaufende Verriegelungsstellung, die hier in eine Fahrzeughochrichtung z ausgerichtet ist. In der Verriegelungsstellung drückt das Verriegelungselement 22 die beiden Bügel 21 nach außen zum stationären Bauteil 4a hin weg, so dass die Enden der Bügel 21 in korrespondierende Aufnahmeöffnungen 25 des stationären Bauteils 4a gehalten sind. Dadurch wird eine feste Koppelung zwischen den beiden Bauteilten 3a, 4a bewirkt und verhindert, dass sich die beiden Bügel 21 aufeinander zu bewegen und die feste Kopplung zwischen den beiden Bauteilen 3a, 4a aufgehoben wird. Der verriegelte Zustand der Koppelungseinrichtung 20 ist in Fig. 2 dargestellt.

Um den Fußgängerschutz abgestuft zu gestalten, kann, wie in Fig. 1 gezeigt, bei einem Fußgängercrash das Verriegelungselement 22 in seiner entriegelten Stellung verbleiben. Damit wird die Bewegung des ersten Bauteils 3a nur unwesentlich behindert, so dass es einen weich geschalteten Verfahrweg, welcher in Fig. 1 mit b gekennzeichnet, durchführen und zumindest teilweise in das stationäre Bauteil 4a eintauchen kann, bis es zu einem Anstoßen einer Stirnfläche 8a des ersten Bauteils 3a an einer Innenseite 9 der Prallplatte 6 kommt. Dabei wird der Verfahrweg b mehr oder weniger mit geringem Widerstand aufgrund der entgegenwirkenden Starrheit der Bügel 21 zurückgelegt. Damit kann für einen Fußgängeraufprall abgestuft eine Energieabsorption mit einem geringeren Kraftniveaus erfolgen, so dass insgesamt ein höherer Schutz für den Fußgänger dargestellt werden kann.

Die Entscheidung, ob ein Fußgängeraufprall oder ein stärkerer Low- oder Highspeed-Crash vorliegt, erfolgt bekanntermaßen über eine Pre-Crash-Sensorik, welche dann bei Low- oder Highspeed-Crash die Koppelungseinrichtung 20 aktiviert und das Verriegelungselement 22 von der Entriegelungsstellung in die Verriegelungsstellung bewegt. Zusätzlich oder alternativ kann bei einem erkannten bevorstehenden Fußgängeraufprall die Koppelungseinrichtung deaktiviert und das Verriegelungselement von der Verriegelungsstellung in die Entriegelungsstellung bewegt werden. Eine Aktivierung der Koppelungseinrichtung 20 führt zu einem Schwenken des als Riegel ausgeführten Verriegelungselements 22 und damit zu einem Auseinanderdrücken der Bügel 21, wodurch eine kräftemäßige starke Koppelung beider Bauteile 3a, 4a erfolgt. Dies hat zur Folge, das sich direkt nach der Verformung des Schaumelements 15 sowohl das bewegliche Bauteil 3a als auch das stationäre Bauteil 4a stark verformt und es zu einem Falten der beiden Bauteile 3a, 4a kommt, wodurch eine höhere Aufprall- bzw. Crashenergie absorbiert werden kann. Durch eine Auswahl der Stabilität bzw. Steifigkeit der Bügel 21 und deren längliche Erstreckung in Fahrzeuglängsrichtung x kann eine gute Steuerung der gewünschten Energieaufnahme erfolgen.

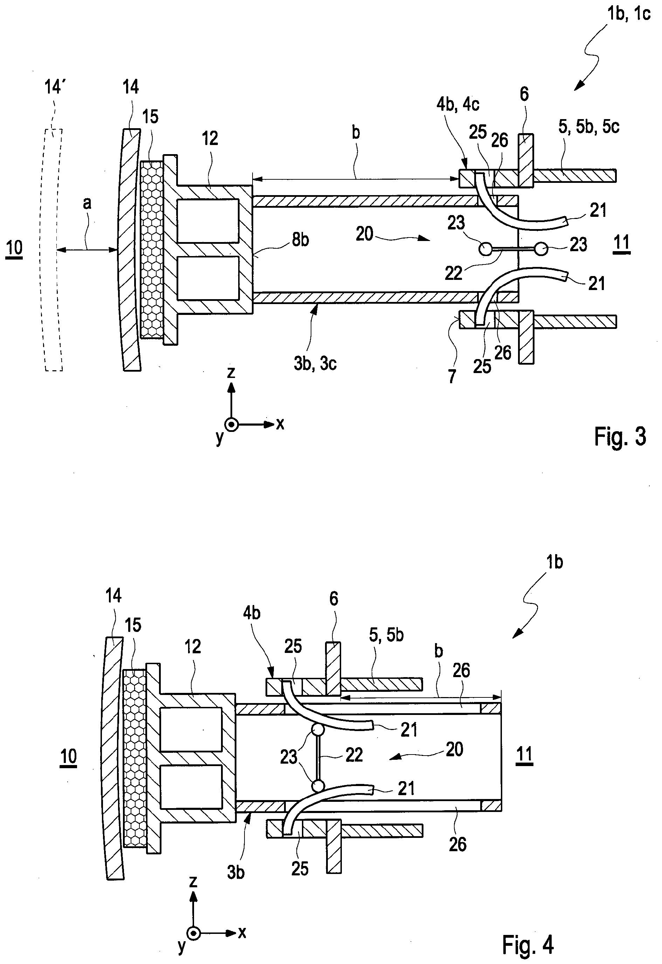

Fig. 3 bis 5 zeigen zwei weitere Ausführungsbeispiele der erfindungsgemäßen Vorrichtung 1b, 1c zum Absorbieren von Bewegungsenergie, bei dem alle gleichen oder gleichwirkenden Bauteile mit denselben Bezugszeichen des ersten Ausführungsbeispiels nach Fig. 1 und 2 versehen sind.

Analog zum ersten Ausführungsbeispiel befindet sich das Verriegelungselement 22 in Fig. 3 in der entriegelten Stellung, so dass das als Riegel ausgeführte Verriegelungselement 22 in Fahrzeuglängsrichtung x ausgerichtet ist. Fig. 3 zeigt analog zu Fig. 1 den Zustand der Vorrichtung 1b, 1c im Normalzustand bzw. vor einem Fußgängeraufprall. Auch hier repräsentiert der gestrichelt dargestellte Stoßfängerüberzug 14 die Position des Stoßfängerüberzugs 14 bei einem herkömmlichen Deformationselement mit einer Länge von 60 bis 70 mm in einem herkömmlichen Kraftfahrzeug. Durch das zweite und dritte Ausführungsbeispiel der erfindungsgemäßen Vorrichtung 1b, 1c zum Absorbieren von Bewegungsenergie ergibt sich ebenfalls eine mögliche Verkürzung a des Fahrzeugüberhangs im Bereich von 35 bis 55 mm, da im Vergleich mit dem herkömmlichen Deformationselement, das Deformationselement 15 der erfindungsgemäßen Vorrichtung 1b, 1c bei gleichbleibenden Personenschutz wesentlich kürzer ausgeführt werden kann.

In Abwandlung zum ersten Ausführungsbeispiel ist das zweite Ausführungsbeispiel der Vorrichtung 1b als so genannte Scherbox ausgeführt. Es liegt keine Prallplatte vor und das stationäre Bauteil 4b ist an dem Längsträger 5 vorgesehen, so dass das bewegliche Bauteil 3b weiter nach rechts in Fahrzeuglängsrichtung x in den Längsträger 5 eintauchen kann. Der Längsträger 5 ist hierzu als Einkammerhohlprofil 5b ausgebildet. In Fig. 3 ist eine Weichschaltung für den verbesserten Fußgängerschutz gezeigt, bei der keine Aktivierung der Koppelungseinrichtung 20 gegeben ist. Analog dem ersten Ausführungsbeispiel nach Fig. 1 ist ein Verfahrweg b gegeben, wobei die Bügel 21 nur einen geringen Widerstand aufbieten. Das bewegliche Bauteil 3b kann quasi frei nach hinten verschieben, wobei nur die Reibung und die Überwindung der Haltekraft bzw. der Rückstellkraft der Bügel 21 der Verschiebung entgegenwirken. Damit wird die Bewegung des ersten Bauteils 3b nur unwesentlich behindert, so dass es einen weich geschalteten Verfahrweg b durchführen kann. Der maximale Verfahrweg b ergibt sich mit einem Anstoßen der Stirnfläche 8 des mit dem ersten Bauteil 3b bewegten Stoßfängerquerträgers 12 an der Stirnfläche 7 des stationären Bauteils 4b. Selbstverständlich können durch geeignete Maßnahmen auch kürzere Verfahrwege vorgegeben werden. Wie zu Fig: 1 beschrieben, erfolgt auch bei Fig. 3 erst nach der Deformation des Schaumelements 15 eine Bewegung des ersten Bauteils 3b, so dass ein abgestufter Fußgängerschutz gegeben ist.

Wie aus Fig. 4 weiter ersichtlich ist, schwenkt das Verriegelungselement 22 bei Aktivierung analog zum ersten Ausführungsbeispiel in eine senkrecht zur Fahrzeuglängsrichtung x verlaufende Verriegelungsstellung, die hier in eine Fahrzeughochrichtung z ausgerichtet ist. In der Verriegelungsstellung drückt das Verriegelungselement 22 die beiden Bügel 21 nach außen zum stationären Bauteil 4b hin weg, so dass die Enden der Bügel 21 in korrespondierende Aufnahmeöffnungen 25 des stationären Bauteils 4b gehalten sind. Dadurch wird eine feste Koppelung zwischen den beiden Bauteilten 3b, 4b bewirkt und verhindert, dass sich die beiden Bügel 21 aufeinander zu bewegen und die feste Kopplung zwischen den beiden Bauteilen 3b, 4b aufgehoben wird.

Wird ein Low- oder Highspeed-Crash sensiert, dann wird die Koppelungseinrichtung 20 aktiviert, so dass es zu Beginn des Crashs zu einer kräftemäßigen starken Koppelung beider Bauteile 3b, 4b kommt. Die in die Öffnungen 26 des beweglichen Bauteils 3b eingreifenden Bügel 21 führen dann im verriegelten Zustand der Kopplungseinrichtung 20 zu einer Scherwirkung der Bügel 21 in der Öffnung 26, die sich dann entsprechend dem zurückgelegten Deformationsweg vergrößert, so dass Aufprall- bzw. Crashenergie abgebaut wird. Das starre Bauteil 4b nimmt ebenso Kräfte auf und leitet diese in den Längsträger 5 ein, ohne sich dabei aber wesentlich zu verformen. Der Längsträger 5 selbst kann durch das eindringende Bauteil 3b aber seine Struktur verändern.

In Abwandlung zum zweiten Ausführungsbeispiel ist das dritte Ausführungsbeispiel der Vorrichtung 1c analog zum ersten Ausführungsbeispiel als so genannte Faltbox ausgeführt. Es liegt aber keine Prallplatte vor und das stationäre Bauteil 4c ist am Längsträger 5 vorgesehen, so dass das bewegliche Bauteil 3c weiter nach rechts in Fahrzeuglängsrichtung x in den Längsträger 5 eintauchen kann. Der Längsträger 5 ist hierzu analog zum zweiten Ausführungsbeispiel als Einkammerhohlprofil 5c ausgebildet. In Fig. 3 ist eine Weichschaltung für den verbesserten Fußgängerschutz gezeigt, bei der keine Aktivierung der Koppelungseinrichtung 20 gegeben ist. Analog dem zweiten Ausführungsbeispiel ist ein Verfahrweg b gegeben, wobei die Bügel 21 nur einen geringen Widerstand aufbieten. Das bewegliche Bauteil 3c kann quasi frei nach hinten verschieben, wobei nur die Reibung und die Überwindung der Haltekraft bzw. der Rückstellkraft der Bügel 21 der Verschiebung entgegenwirken. Damit wird die Bewegung des ersten Bauteils 3c nur unwesentlich behindert, so dass es einen weich geschalteten Verfahrweg b durchführen kann. Der maximale Verfahrweg b ergibt sich mit einem Anstoßen der Stirnfläche 8 des mit dem ersten Bauteil 3c bewegten Stoßfängerquerträgers 12 an der Stirnfläche 7 des stationären Bauteils 4c. Selbstverständlich können durch geeignete Maßnahmen auch kürzere Verfahrwege vorgegeben werden. Wie bei dem ersten und zweiten Ausführungsbeispiel erfolgt auch beim dritten Ausführungsbeispiel erst nach der Deformation des Schaumelements 15 eine Bewegung des ersten Bauteils 3c, so dass ein abgestufter Fußgängerschutz gegeben ist.

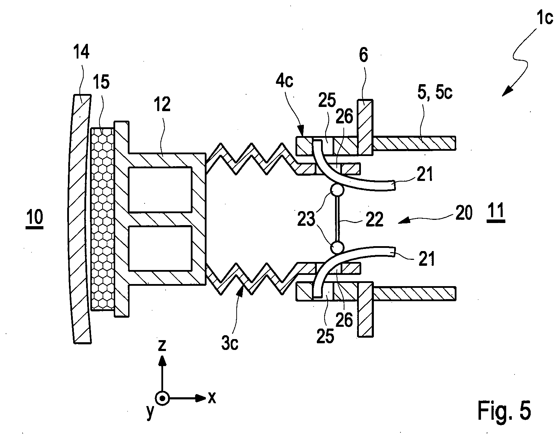

Wie aus Fig. 5 weiter ersichtlich ist, schwenkt das Verriegelungselement 22 bei Aktivierung analog zum ersten und zweiten Ausführungsbeispiel in eine senkrecht zur Fahrzeuglängsrichtung x verlaufende Verriegelungsstellung, die hier in eine Fahrzeughochrichtung z ausgerichtet ist. In der Verriegelungsstellung drückt das Verriegelungselement 22 die beiden Bügel 21 nach außen zum stationären Bauteil 4c hin weg, so dass die Enden der Bügel 21 in korrespondierende Aufnahmeöffnungen 25 des stationären Bauteils 4c gehalten sind. Dadurch wird eine feste Koppelung zwischen den beiden Bauteilen 3c, 4c bewirkt und verhindert, dass sich die beiden Bügel 21 aufeinander zu bewegen und die feste Kopplung zwischen den beiden Bauteilen 3c, 4c aufgehoben wird.

Wird ein Low- oder Highspeed-Crash sensiert, dann wird die Koppelungseinrichtung 20 aktiviert, so dass es zu Beginn des Crashs zu einer kräftemäßigen starken Koppelung beider Bauteile 3c, 4c kommt. Die in die Öffnungen 26 des beweglichen Bauteils 3b eingreifenden Bügel 21 führen dann im verriegelten Zustand der Kopplungseinrichtung 20 zu einer Blockierung des beweglichen Bauelements 3c, so dass Aufprall- bzw. Crashenergie durch Falten des beweglichen Bauelements 3c abgebaut wird. Das starre Bauteil 4c nimmt ebenso Kräfte auf und leitet diese in den Längsträger 5 ein, ohne sich dabei aber wesentlich zu verformen.

### BEZUGSZEICHENLISTE

- 1a, 1b, 1c: Vorrichtung
- 3a, 3b, 3c: erstes Bauteil
- 4a, 4b, 4c: zweites Bauteil
- 5: Längsträger
- 5a: Zweikammerhohlprofil
- 5b, 5c: Einkammerhohlprofil
- 6: Prallplatte
- 7, 8a, 8b: Stirnfläche
- 9: Innenseite
- 10: Fahrzeugäußeres
- 11: Fahrzeuginneres
- 12: Stoßfängerquerträger
- 14, 14': Stoßfängerüberzug
- 15: Deformationselement
- 20: Koppelungseinrichtung
- 21: Bügel
- 22: Verriegelungselement
- 23: Verdickungen
- 25: Aufnahmeöffnungen
- 26: Öffnungen
- a: Verkürzung des Fahrzeugüberhangs
- b: Verfahrweg
- x: Fahrzeuglängsrichtung
- y: Fahrzeugquerrichtung
- z: Fahrzeughochrichtung

## Patentansprüche

1. Vorrichtung zum Absorbieren von Bewegungsenergie, insbesondere zum Einbau in ein Kraftfahrzeug, mit einem ersten stationären Bauteil (4a, 4b, 4c) und einem zweiten, relativ zu dem ersten Bauteil (4a, 4b, 4c) beweglichen Bauteil (3a, 3b, 3c), wobei zumindest eines der Bauteile (3a, 3b, 3c, 4a, 4b, 4c) bei Überschreiten eines bestimmten Kraftniveaus durch plastische Verformung Energie umwandelt, mit einer Koppelungseinrichtung (20), welche das erste Bauteil (4a, 4b, 4c) und das zweite Bauteil (3a, 3b, 3c) in Wirkverbindung bringt, derart, dass bei nicht aktivierter Koppelungseinrichtung (20) die beiden Bauteile (3a, 3b, 3c, 4a, 4b, 4c) nur mit geringer Energieumwandlung zueinander bewegbar sind und bei aktivierter Koppelungseinrichtung (20) Kräfte von einem Bauteil (3a, 3b, 3c) auf das andere Bauteil (4a, 4b, 4c) übertragbar sind, wobei die Koppelungseinrichtung (20) dauerhaft im Eingriff mit den beiden Bauteilen (3a, 3b, 3c, 4a, 4b, 4c) ist und so dauerhaft ein erstes niedriges Koppelungskraftniveau erzeugt und bei Aktivierung der Koppelungseinrichtung (20) eine Verstärkung der Koppelungskräfte von dem ersten niedrigen Koppelungskraftniveau auf ein hohes Koppelungskraftniveau erfolgt und es zu einer plastischen Verformung zumindest eines Bauteils (3a, 3b, 3c, 4a, 4b, 4c) kommt, **dadurch gekennzeichnet, dass** das bewegte Bauteil (3a, 3b, 3c) über ein Deformationselement (15) verfügt, welches im Crash-Fall zunächst verformt, so dass es erst anschließend zu einer Bewegung des bewegten Bauteils (3a, 3b, 3c) kommt, wobei zur Aktivierung der Koppelungseinrichtung (20) ein Verriegelungselement (22) vorgesehen ist, und wobei die Koppelungseinrichtung (20) zumindest einen Bügel (21) umfasst, welcher beide Bauteile (3a, 3b, 3c, 4a, 4b, 4c) verbindet und der zur Aktivierung der Koppelungseinrichtung (20) von dem Verriegelungselement (22) nach außen zum bewegten Bauteil (3a, 3b, 3c) hin weggedrückt wird, wobei der zumindest eine Bügel (21) in eine Aufnahmeöffnung (25) des stationären Bauteils (4a, 4b, 4c) eingeführt ist und durch eine Öffnung (26) im beweglichen Bauteil (3a, 3b, 3c) hindurch in das Innere des beweglichen Bauteils (3a, 3b, 3c) führt..

2. Vorrichtung nach Anspruch 1, **dadurch gekennzeichnet, dass** das Verriegelungselement (22) als beweglicher Riegel ausgeführt ist, welcher von einer Entriegelungsstellung in eine Verriegelungsstellung bewegbar ist.

3. Vorrichtung nach Anspruch 1 oder 2, **dadurch gekennzeichnet, dass** das stationäre Bauteil (4a) an einer Prallplatte (6) eines Längsträgers (5) gehalten ist.

4. Vorrichtung nach Anspruch 3, **dadurch gekennzeichnet, dass** das bewegliche Bauteil (3a) im Crash-Fall bei deaktivierter Koppelungseinrichtung (20) zumindest teilweise in das stationäre Bauteil (4a) eintaucht.

5. Vorrichtung nach Anspruch 3 oder 4, **dadurch gekennzeichnet, dass** das bewegliche Bauteil (3a) und das stationäre Bauteil (4a) im Crash-Fall bei aktivierter Koppelungseinrichtung (20) durch Falten plastisch verformbar sind.

6. Vorrichtung nach Anspruch 1 oder 2, **dadurch gekennzeichnet, dass** das stationäre Bauteil (4b, 4c) mit dem Längsträger (5) verbunden ist.

7. Vorrichtung nach Anspruch 6, **dadurch gekennzeichnet, dass** das bewegliche Bauteil (3b, 3c) im Crash-Fall bei deaktivierter Kopplungseinrichtung (20) zumindest teilweise in den Längsträger (5) eintaucht.

8. Vorrichtung nach Anspruch 6 oder 7, **dadurch gekennzeichnet, dass** das bewegliche Bauteil (3b) im Crash-Fall bei aktivierter Koppelungseinrichtung (20) zumindest teilweise in den Längsträger (5) eintaucht, wobei die Kopplungseinrichtung (20) das bewegliche Bauteil (3b) während des Eintauchens durch Scheren plastisch verformt.

9. Vorrichtung nach Anspruch 6 oder 7, **dadurch gekennzeichnet, dass** das bewegliche Bauteil (3c) im Crash-Fall bei aktivierter Koppelungseinrichtung (20) blockiert ist und durch Falten plastisch verformbar ist.

10. Vorrichtung nach einem der vorhergehenden Ansprüche 3 bis 9, **dadurch gekennzeichnet, dass** der Längsträger (5) als Einkammerhohlprofil (5b) oder als Zweikammerprofil (5a) ausgebildet ist.

11. Vorrichtung nach einem der vorhergehenden Ansprüche 1 bis 10, **dadurch gekennzeichnet, dass** eine Pre-Crash-Sensorik vorhanden ist, welche die Kopplungseinrichtung bei einem erkannten Crashfall vor dem Aufprall aktiviert und das Verriegelungselement (22) von der Entriegelungsstellung in die Verriegelungsstellung bewegt und/oder welche die Kopplungseinrichtung bei einem erkannten bevorstehenden Fußgängeraufprall deaktiviert und das Verriegelungselement (22) von der Verriegelungsstellung in die Entriegelungsstellung bewegt.

## Claims

1. Device for absorbing movement energy, in particular for installation in a motor vehicle, with a first stationary component (4a, 4b, 4c) and a second component (3a, 3b, 3c) movable relative to the first component (4a, 4b, 4c), wherein at least one of the components (3a, 3b, 3c, 4a, 4b, 4c) converts energy by way of plastic deformation when a determined force level is exceeded, with a coupling device (20), which brings the first component (4a, 4b, 4c) and the second component (3a, 3b, 3c) into cooperative connection such that the two components (3a, 3b, 3c, 4a, 4b, 4c) are only movable towards one another with low energy conversion when the coupling device (20) is not activated and forces can be transferred from one component (3a, 3b, 3c) to the other component (4a, 4b, 4c) when the coupling device (20) is activated, wherein the coupling device (20) is permanently in engagement with the two components (3a, 3b, 3c, 4a, 4b, 4c) and thus permanently generates a first low coupling force level and a strengthening of the coupling forces takes place from the first low coupling force level to a high coupling force level when the coupling device (20) is activated and plastic deformation of at least one component (3a, 3b, 3c, 4a, 4b, 4c) occurs, **characterised in that** the movable component (3a, 3b, 3c) has a deformation element (15), which initially deforms in a crash situation such that only then does a movement of the movable component (3a, 3b, 3c) occur, wherein a locking element (22) is provided to activate the coupling device (20) and wherein the coupling device (20) has at least one bracket (21), which connects both components (3a, 3b, 3c, 4a, 4b, 4c) and which is pressed away from the locking element (22) outwards towards the movable component (3a, 3b, 3c) in order to activate the coupling device (20), wherein the at least one bracket (21) is inserted into a receiving opening (25) of the stationary component (4a, 4b, 4c) and leads through an opening (26) in the movable component (3a, 3b, 3c) into the interior of the movable component (3a, 3b, 3c).

2. Device according to claim 1, **characterised in that** the locking element (22) is designed as a movable lock which is movable from an unlocking position into a locking position.

3. Device according to claim 1 or 2, **characterised in that** the stationary component (4a) is held on an impact plate (6) of a longitudinal beam (5).

4. Device according to claim 3, **characterised in that** the movable component (3a) at least partially plunges into the stationary component (4a) in a crash situation when the coupling device (20) is deactivated.

5. Device according to claim 3 or 4, **characterised in that** the movable component (3a) and the stationary component (4a) are plastically deformable by folding in a crash situation when the coupling device (20) is activated.

6. Device according to claim 1 or 2, **characterised in that** the stationary component (4b, 4c) is connected to the longitudinal beam (5).

7. Device according to claim 6, **characterised in that** the movable component (3b, 3c) at least partially plunges into the longitudinal beam (5) in a crash situation when the coupling device (20) is deactivated.

8. Device according to claim 6 or 7, **characterised in that** the movable component (3b) at least partially plunges into the longitudinal beam (5) in a crash situation when the coupling device (20) is activated, wherein the coupling device (20) plastically deforms the movable component (3b) by shearing when it plunges in.

9. Device according to claim 6 or 7, **characterised in that** the movable component (3c) is blocked in a crash situation when the coupling device (20) is activated and is plastically deformable by folding.

10. Device according to any one of the preceding claims 3 to 9, **characterised in that** the longitudinal beam (5) is designed as a single-chamber hollow profile (5b) or as a two-chamber profile (5a).

11. Device according to any one of the preceding claims 1 to 10, **characterised in that** a pre-crash sensor is present which activates the coupling device prior to impact when a crash situation is detected and the locking element (22) moves from the unlocking position into the locking position and/or which deactivates the coupling device when an impending pedestrian impact is detected and moves the locking element (22) from the locking position into the unlocking position.

## Revendications

1. Dispositif d'absorption d'énergie de déplacement, en particulier pour l'intégration dans un véhicule automobile, avec un premier composant stationnaire (4a, 4b, 4c) et un second composant (3a, 3b, 3c) mobile par rapport au premier composant (4a, 4b, 4c), dans lequel au moins un des composants (3a, 3b, 3c, 4a, 4b, 4c) convertit de l'énergie en cas de dépassement d'un niveau de force déterminé par déformation plastique, avec un dispositif de couplage (20) qui amène le premier composant (4a, 4b, 4c) et le second composant (3a, 3b, 3c) en liaison active de telle manière qu'en cas de dispositif de couplage (20) non activé les deux composants (3a, 3b, 3c, 4a, 4b, 4c) ne puissent être déplacés les uns par rapport aux autres qu'avec conversion d'énergie faible et en cas de dispositif de coupage (20) activé des forces d'un composant (3a, 3b, 3c) puissent être transférées à l'autre composant (4a, 4b, 4c), dans lequel le dispositif de couplage (20) est durablement en prise avec les deux composants (3a, 3b, 3c 4a, 4b, 4c) et ainsi génère durablement un premier niveau de force de couplage faible et en cas d'activation du dispositif de couplage (20) un renforcement des forces de couplage du premier niveau de force de couplage faible à un niveau de force de couplage élevé est effectué et il se produit une déformation plastique au moins d'un composant (3a, 3b, 3c, 4a, 4b, 4c), **caractérisé en ce que** le composant déplacé (3a, 3b, 3c) dispose d'un élément de déformation (15) qui se déforme tout d'abord en cas de collision de sorte qu'il se produise seulement suite à un mouvement du composant (3a, 3b, 3c) déplacé, dans lequel pour l'activation du dispositif de couplage (20) un élément de verrouillage (22) est prévu, et dans lequel le dispositif de couplage (20) comporte au moins un étrier (21) qui relie les deux composants (3a, 3b, 3c, 4a, 4b, 4c) et qui est pressé pour l'activation du dispositif de couplage (20) loin de l'élément de verrouillage (22) vers l'extérieur vers le composant déplacé (3a, 3b, 3c), dans lequel l'au moins un étrier (21) est introduit dans une ouverture de réception (25) du composant stationnaire (4a, 4b, 4c) et mène au travers d'une ouverture (26) dans le composant mobile (3a, 3b, 3c) à l'intérieur du composant mobile (3a, 3b, 3c).

2. Dispositif selon la revendication 1, **caractérisé en ce que** l'élément de verrouillage (22) est réalisé comme un verrou mobile qui est mobile d'une position de déverrouillage à une position de verrouillage.

3. Dispositif selon la revendication 1 ou 2, **caractérisé en ce que** le composant stationnaire (4a) est maintenu sur une plaque d'impact (6) d'une poutre longitudinale (5).

4. Dispositif selon la revendication 3, **caractérisé en ce que** le composant mobile (3a) pénètre en cas de collision en cas de dispositif de couplage (20) désactivé au moins partiellement dans le composant stationnaire (4a).

5. Dispositif selon la revendication 3 ou 4, **caractérisé en ce que** le composant mobile (3a) et le composant stationnaire (4a) sont déformables plastiquement en cas de collision en cas de dispositif de couplage (20) activé par pliage.

6. Dispositif selon la revendication 1 ou 2, **caractérisé en ce que** le composant stationnaire (4b, 4c) est raccordé à la poutre longitudinale (5).

7. Dispositif selon la revendication 6, **caractérisé en ce que** le composant mobile (3b, 3c) pénètre en cas de collision en cas de dispositif de couplage (20) désactivé au moins partiellement dans la poutre longitudinale (5).

8. Dispositif selon la revendication 6 ou 7, **caractérisé en ce que** le composant mobile (3b) pénètre en cas de collision en cas de dispositif de couplage (20) activé au moins partiellement dans la poutre longitudinale (5), dans lequel le dispositif de couplage (20) déforme plastiquement le composant mobile (3b) pendant la pénétration par cisaillement.

9. Dispositif selon la revendication 6 ou 7, **caractérisé en ce que** le composant mobile (3c) est bloqué en cas de collision en cas de dispositif de couplage (20) activé et est déformable plastiquement par pliage.

10. Dispositif selon l'une quelconque des revendications précédentes 3 à 9, **caractérisé en ce que** la poutre longitudinale (5) est réalisée comme profil creux à une chambre (5b) ou comme profil à deux chambres (5a).

11. Dispositif selon l'une quelconque des revendications précédentes 1 à 10, **caractérisé en ce qu'**un système de capteur de pré-collision est présent, lequel active le dispositif de couplage lorsqu'un cas de collision est détecté avant l'impact et déplace l'élément de verrouillage (22) de la position de déverrouillage dans la position de verrouillage et/ou lequel désactive le dispositif de couplage en cas d'impact de piétons se trouvant devant détecté et déplace l'élément de verrouillage (22) de la position de verrouillage dans la position de déverrouillage.
